# EUROPÄISCHE PATENTSCHRIFT

(11) **EP 2 514 570 B1**
(45) Veröffentlichungstag und Bekanntmachung des Hinweises auf die Patenterteilung: **26.11.2014**
(21) Anmeldenummer: 12157409.9
(22) Anmeldetag: 29.02.2012
(51) Int. Cl.: B25F 5/00, B25D 17/24, F16F 3/04, F16F 7/116

(54) **Handwerkzeugmaschine und Tilger**
Handheld machine tool and vibration damper
Machine-outil manuelle et réducteur de vibrations

(30) Priorität: 20.04.2011 DE 102011007725
(43) Veröffentlichungstag der Anmeldung: 24.10.2012
(73) Patentinhaber: HILTI Aktiengesellschaft, 9494 Schaan (LI)
(72) Erfinder: Mößnang, Franz, 86391 Stadtbergen (DE)
(74) Vertreter: Hilti Aktiengesellschaft Corporate Intellectual Property

(56) Entgegenhaltungen:
- DE-A1-102007 000 056
- DE-A1-102007 000 057
- DE-A1-102007 055 792
- GB-A- 2 169 684
- GB-A- 2 170 573

## Beschreibung

### GEBIET DER ERFINDUNG

Die vorliegende Erfindung betrifft eine Handwerkzeugmaschine und einen Tilger für die Handwerkzeugmaschine.

DE 10 2007 000 056 A1 offenbart einen Tilger für eine Handwerkzeugmaschine gemäß dem Oberbegriff des unabhängigen Anspruchs 1. Der Tilger hat einen Massekörper, der längs einer Tilgungsachse in einem Gehäuse beweglich ist. Der Massekörper hat drei längliche zu der Tilgungsachse parallele Hohlräume, in welche jeweils eine Feder eingesetzt ist. Durch Öffnungen an den Stirnseiten der Hohlräume können zu der Tilgungsachse parallele Stifte des Gehäuses in den Hohlraum hineinragen. Bei einer Auslenkung in eine Richtung, dringen die Stifte in dieser Richtung weiter in den Hohlraum ein, während sich die gegenüberliegenden Stifte aus dem Hohlraum ausrücken. Die Federn werden durch die eindringenden Stifte gegen die gegenüberliegende Innenseite des Hohlraums gedrückt. Die Federkraft treibt den Massekörper in die Ruhelage zurück. Ein Schaltmechanismus versetzt einzelne Stifte derart, dass sie nicht weiter in den Hohlraum hineinragen können. Die Zahl der Federn, welche bei einer Auslenkung an der rücktreibenden Kraft beteiligt sind, wird hierdurch eingestellt.

### OFFENBARUNG DER ERFINDUNG

Der erfindungsgemäße Tilger für eine Handwerkzeugmaschine mit einem Linearantrieb hat ein Gehäuse und einen gegenüber dem Gehäuse längs einer Tilgungsachse beweglichen Massekörper. Ein längs der Tilgungsachse bewegliches, erstes Kupplungselement, die mit dem Massekörper gekoppelt ist, in eine erste Richtung kraftbeaufschlagt. Ein längs der Tilgungsachse bewegliches, zweites Kupplungselement ist mittels einer zweiten Feder, die mit dem Gehäuse gekoppelt ist, in eine zweite Richtung kraftbeaufschlagt. Die erste Richtung ist gegenläufig zu der zweiten Richtung. Während der Massekörper durch die erste Feder das erste Kopplungselement in die erste Richtung schieben kann, drückt das Gehäuse über die zweite Feder das zweite Kopplungselement in die der ersten Richtung entgegengesetzte, zweite Richtung.

Das erste Kupplungselement ist bei einer Bewegung in die erste Richtung mit dem zweiten Kupplungselement kraftschlüssig gekoppelt und bei einer Bewegung in die zweite Richtung von dem zweiten Kupplungselement entkoppelt. Das erste Kupplungselement bewegt sich somit in die erste Richtung unter Mitnahme des zweiten Kupplungselements und in die zweite Richtung ohne Mitnahme des zweiten Kupplungselements. Die erste Richtung entspricht hierbei der Wirkrichtung der ersten Feder auf das erste Kupplungselement, d.h. die Richtung in der die erste Feder auf das erste Kupplungselement eine Kraft ausübt.

Eine Schalteinrichtung kann in Abhängigkeit von Schaltstellungen eine Bewegung des ersten Kupplungselements relativ zu dem Gehäuse hindern oder freigeben und/oder die Schalteinrichtung kann in Abhängigkeit der Schaltstellungen eine Bewegung des zweiten Kupplungselements in die zweite Richtung relativ zu dem Massekörper hindern oder freigeben. Sind beide Kupplungselemente durch die Schalteinrichtung in ihrer Bewegung gegenüber dem Gehäuse bzw. dem Massekörper frei, d.h. nicht gehemmt, wirken die beiden Federn in Serie auf den Massekörper. Sind beide Kupplungselemente in ihrer Bewegung durch die Schalteinrichtung gehemmt, wirken die beiden Federn in parallel auf den Massekörper. Ist das erste Kupplungselement gehemmt und das zweite Kupplungselement frei wirkt nur die erste Feder; ist das erste Kupplungselement frei und das zweite Kupplungselement gehemmt, wirkt nur die zweite Feder.

Eine Ausgestaltung sieht vor, dass eine in die erste Richtung weisende, erste Anschlagfläche des ersten Kupplungselements lösbar an einer in die zweite Richtung weisenden, zweiten Anschlagfläche des zweiten Kupplungselements anliegt. Die erste Kupplungseinrichtung kann in die erste Richtung nur unter Mitnahme des zweiten Kupplungseinrichtung aufgrund der aneinander anliegenden Anschlagflächen bewegt werden. Vice versa kann das zweite Kupplungselement nur unter Mitnahme des ersten Kupplungselements in die zweite Richtung bewegt werden. Eine Bewegung des ersten Kupplungselements in die zweite Richtung oder eine Bewegung des zweiten Kupplungselements in die erste Richtung kann ohne Mitnahme erfolgen, weil die beiden Kupplungselemente lösbar aneinander anliegen. Die beiden Anschlagfläche können bereits aneinander anliegen, wenn der Massekörper in Ruhestellung ist oder wenn der Massekörper etwas ausgelenkt ist. Die Anschlagflächen können senkrecht oder geneigt zu der Tilgungsachse sein, vorzugsweise sind die Anschlagflächen zueinander parallel. Alternativ ist ein längs der Tilgungsachse bewegliches, drittes Kupplungselement vorgesehen, das an der ersten Anschlagfläche und der zweiten Anschlagfläche anliegt und von wenigstens von der ersten Anschlagfläche in die zweite Richtung oder von der zweiten Anschlagfläche in die erste Richtung lösbar ist. Die lösbare Mitnahme des zweiten Kupplungselement durch das erste Kupplungselement erfolgt über das dritte Kupplungselement.

Eine Ausgestaltung sieht vor, dass in einer der Schaltstellungen der Massekörper das zweite Kupplungselement an einer zu der zweiten Richtung geneigten, dritten Fläche berührt und in einer anderen Schaltstellung der Massekörper von der dritten Fläche beabstandet ist. Die andere Schaltstellung hemmt die relative Bewegung des Massekörpers zu dem zweiten Kupplungselement. Alternativ oder zusätzlich ist vorgesehen, dass in einer der Schaltstellungen das Gehäuse das erste Kupplungselement an einer zu der ersten Richtung geneigten, vierten Fläche berührt und in einer anderen Schaltstellung das Gehäuse von der vierten Fläche beabstandet ist.

Eine Ausgestaltung sieht eine Handwerkzeugmaschine vor, die ein pneumatisches Schlagwerk, dessen Schlagperiode über ein Schaltelement einstellbar ist, aufweist. Das Schaltelement ist mit der Schalteinrichtung gekoppelt. Das von dem Anwender betätigbare

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrhammer;
Fig. 2 eine isometrische Darstellung eines angeregten Tilgers, eingestellt auf eine niedrige Resonanzfrequenz;
Fig. 3 eine isometrische Darstellung des angeregten Tilgers, eingestellt auf eine hohe Resonanzfrequenz;
Fig. 4 Längsschnitt in der in Fig. 8 angegebenen Ebene I-I durch den auf niedrige Resonanzfrequenz eingestellten und angeregten Tilger;
Fig. 5 Längsschnitt in der in Fig. 8 angegebenen Ebene I-I durch den auf niedrige Resonanzfrequenz eingestellten Tilger in Ruhestellung;
Fig. 6 Längsschnitt in der in Fig. 8 angegebenen Ebene I-I durch den auf eine hohe Resonanzfrequenz eingestellten und angeregten Tilger
Fig. 7 Längsschnitt in der in Fig. 8 angegebenen Ebene I-I durch den auf eine hohe Resonanzfrequenz eingestellten Tilger in Ruhestellung;
Fig. 8 Querschnitt durch den Tilger von Fig. 2;
Fig. 9 und 10 ein weiterer Tilger in zwei Einstellungen, jeweils in Ruhestellung gezeigt;
Fig. 11 und 12 ein weiterer Tilger in zwei Einstellungen, jeweils in Ruhestellung gezeigt;
Fig. 13 und 14 ein weiterer Tilger in zwei Einstellungen, jeweils in Ruhestellung gezeigt;

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

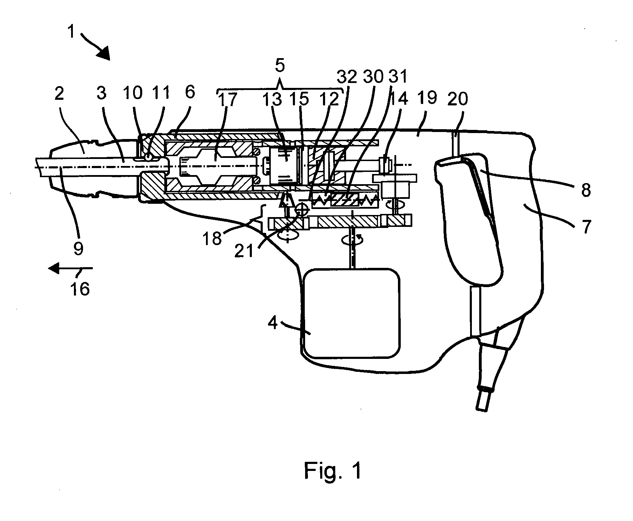

Fig. 1 zeigt schematisch einen Bohrhammer **1.** Der Bohrhammer **1** hat eine Werkzeugaufnahme **2,** in welche als Werkzeug ein Bohrmeißel **3** eingesetzt werden kann. Einen primären Antrieb des Bohrhammers **1** bildet ein Motor **4,** welcher ein Schlagwerk **5** und optional eine Abtriebswelle **6** antreibt. Ein Anwender kann den Bohrhammer **1** mittels eines Handgriffs **7** führen und mittels eines Systemschalters **8** den Bohrhammer **1** in Betrieb nehmen. Der Handgriff **7** ist in Verlängerung der Arbeitsachse **9** angeordnet, um den Bohrmeißel **3** und das Schlagwerk **5** ergonomisch gegen ein Werkstück pressen zu können. Im Betrieb dreht der Bohrhammer **1** den Bohrmeißel **3** kontinuierlich um eine Arbeitsachse **9** und kann dabei den Bohrmeißel **3** längs der Arbeitsachse **9** in das Werkstück schlagen. Die Abtriebswelle **6** kann während des Schlagens den Bohrmeißel **3** zusätzlich um die Arbeitsachse **9** drehen.

Die Werkzeugaufnahme **2** hat eine Aufnahmehülse **10,** in welche ein Ende des Bohrmeißels **3** eingesteckt werden kann. Verriegelungselemente **11** in der Aufnahmehülse **10** sichern den Bohrmeißel **3** gegen ein Herausfallen. Die Aufnahmehülse **10** hat eine innere, zu dem Bohrmeißel **3** formschlüssige, nicht-rotationssymmetrische Kontur, welche ein Drehmoment von der Aufnahmehülse **10** auf den Bohrmeißel **3** überträgt. In der Aufnahmehülse **10** können beispielsweise radial nach innen ragende Zapfen oder Kugeln **11** vorgesehen sein.

Das Schlagwerk **5** ist beispielsweise ein pneumatisches Schlagwerk **5.** Ein beispielsweise kolbenförmiger Erreger **12** und ein beispielsweise kolbenförmiger Schläger **13** sind in dem Schlagwerk **5** längs der Arbeitsachse **9** beweglich geführt. Der Erreger **12** kann auch topfförmig sein. Der Erreger **12** ist über einen Exzenter **14** oder einen Taumelfinger an den Motor **4** angekoppelt und zu einer periodischen, linearen Bewegung gezwungen. Eine Luftfeder gebildet durch eine pneumatische Kammer **15** zwischen Erreger **12** und Schläger **13** (Schlagkolben) koppelt eine Bewegung des Schlägers **13** an die Bewegung des Erregers **12** an. Der Schläger **13** kann in Schlagrichtung **16** direkt auf ein hinteres Ende des Bohrmeißels **3** aufschlagen oder mittelbar über einen im Wesentlichen ruhenden Zwischenschläger **17** (Döpper) einen Teil seines Impuls auf den Bohrmeißel **3** übertragen.

Die Antriebskomponenten, z.B. der Motor **4,** das Schlagwerk **5,** ein Getriebe **18,** sind vorzugsweise in einem von dem Handgriff **7** getrennten Maschinengehäuse **19** angeordnet. Der Handgriff **7** ist über nicht-lösbare dämpfende Aufhängungen **20** an dem Maschinengehäuse **19** angelegt. Die Verteilung der Massen der schwersten Komponenten Motor **4,** Schlagwerk **5** und ggf. einem Batteriepack bestimmen die Lage eines Schwerpunkts **21** der Handwerkzeugmaschine **1.** Bei dem außerhalb der Arbeitsachse **9** angeordneten Motor **4** liegt der Schwerpunkt **21** versetzt zu der Arbeitsachse **9.**

Ein Tilger **30** ist in dem Maschinengehäuse **19,** vorzugsweise zwischen der der Arbeitsachse **9** und dem Schwerpunkt **21** und längs der Arbeitsachse **9** vorzugsweise zwischen dem Schwerpunkt **21** und dem Handgriff **7** angeordnet. Der Tilger **30** hat einen Massekörper **31,** der gegen eine Federkraft aus seiner Ruhelage längs einer Tilgungsachse **32** auslenkbar ist. In der Ruhelage heben sich die auf den Massekörper **31** wirkenden Federkräfte und gegebenenfalls die Gravitationskraft gegeneinander auf. In dem dargestellten Beispiel ist der Tilger **30** mit der Tilgungsachse **32** parallel zur Arbeitsachse **9** orientiert in dem Maschinengehäuse **19** eingebaut.

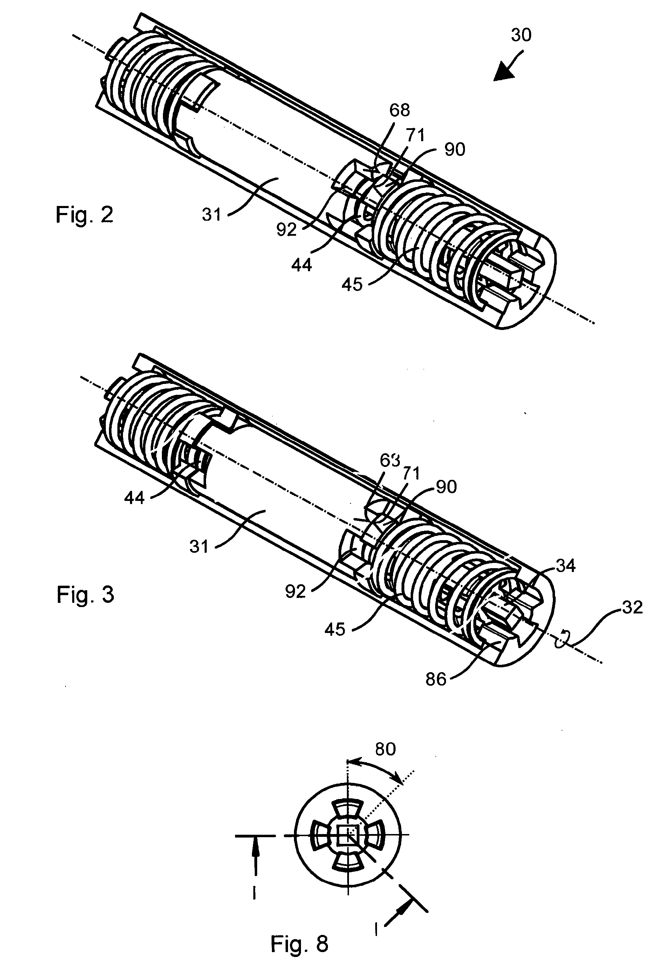

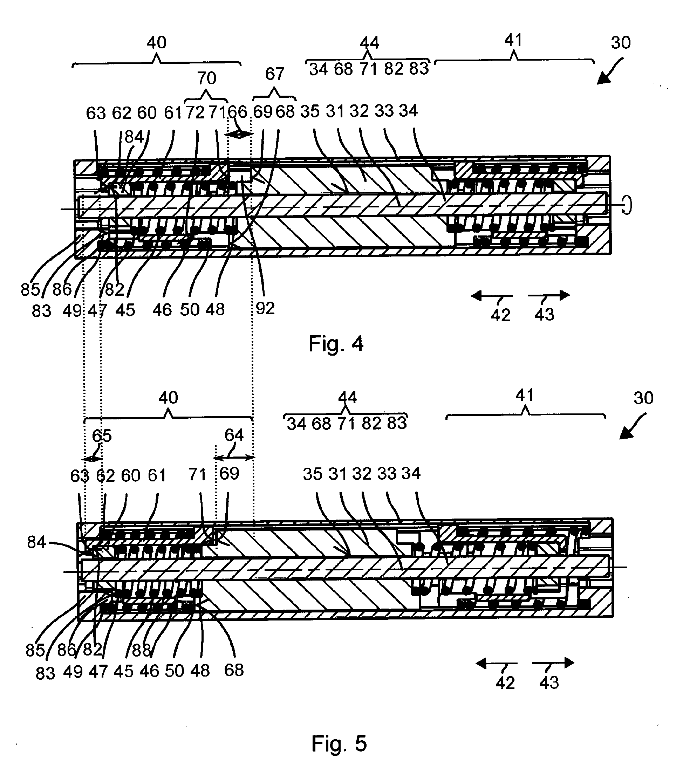

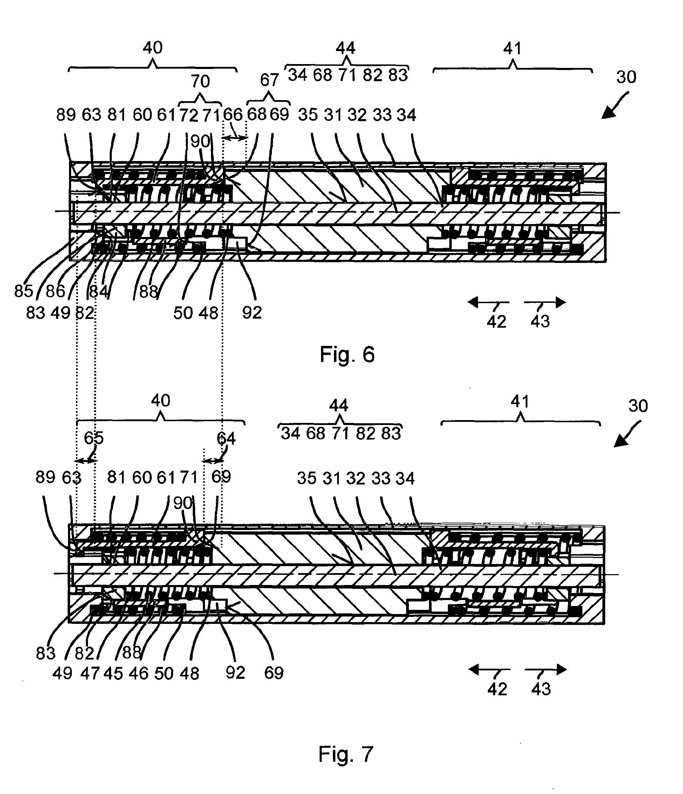

Fig. 2 bis 8 zeigen eine beispielhafte Ausführung des Tilgers **30.** Der Tilger **30** kann mechanisch zwischen mehreren Einstellungen umgeschaltet werden, die sich in ihrem Anregungsverhalten unterscheiden. Eine Einstellung mit einer niedrigen Resonanzfrequenz ist in den Fig. 2, 4 und 5 und eine weitere Einstellung mit einer höheren Resonanzfrequenz ist in den Fig. 3, 6 und 7 dargestellt. Fig. 2 und 3 zeigen den Tilger **30** in einer isometrischen Ansicht mit teilweise aufgeschnittenem Gehäuse **33** und nach links ausgelenktem Massekörper **31.** Fig. 4 und 6 zeigen den Massekörper **31** in Ruhestellung, Fig. 5 und 7 in einer nach links ausgelenkten Schaltstellung. Fig. 8 gibt in dem Querschnitt senkrecht zur Tilgungsachse **32** eine genickte Fläche I-I an, entlang welcher die Längsschnitte der Fig. 4, 5, 6 und 7 verlaufen. Im nachfolgenden ist axial ein Synonym für eine Richtungsangabe längs oder parallel zu der Tilgungsachse **32** und radial für eine Richtungsangabe senkrecht zur Tilgungsachse **32.**

Der Tilger **30** hat eine Welle **34,** auf welcher der Massekörper **31** axial, d.h. längs der Tilgungsachse **32** beweglich gelagert ist. Der Massekörper **31** hat beispielsweise einen zylindrischen Grundkörper. Längs der Tilgungsachse **32,** z.B. der Symmetrieachse des Grundkörpers, ist eine Längsbohrung **35** vorgesehen, durch welche die Welle **34** gesteckt ist. Der Querschnitt der Längsbohrung **35** ist auf den Querschnitt der Welle **34** derart abgestimmt, dass der Massekörper durch die Welle **34** geführt, axial beweglich ist. An einer radialen Bewegung des Massekörpers **31,** d.h. senkrecht zu der Tilgungsachse **32** ist der Massekörper **31** gehindert. Die Querschnitte von Längsbohrung **35** und Welle **34** sind beispielsweise quadratisch. Durch Drehen der Welle **34** um die Tilgungsachse **32** kann der Massekörper **31** mitgedreht werden. Die Querschnitte können auch andere nicht-rotationssymmetrische Formen aufweisen.

Die Federkraft auf den Massekörper **31** wird durch eine erste Federeinrichtung **40** und vorzugsweise eine symmetrisch angeordnete zweite Federeinrichtung **41** ausgeübt. Die erste Federeinrichtung **40** übt eine Rückstellkraft auf den Massekörper **31** bei einer Auslenkung in eine erste Richtung **42** längs der Tilgungsachse **32** aus und die zweite Federeinrichtung **41** übt eine Rückstellkraft bei einer Auslenkung in eine gegenläufige zweite Richtung **43** aus. Die beiden Federeinrichtungen **40, 41** sind vorzugsweise baugleich und symmetrisch zu dem Massekörper **31** angeordnet, weshalb nachfolgend nur die erste Federeinrichtung **40** stellvertretend für beide Federeinrichtungen **40, 41** beschrieben wird.

Die Federeinrichtung **40** hat einen Schaltmechanismus **44,** mit welchem ihre Federkonstante in Abhängigkeit von Schaltstellungen auf verschiedene Werte eingestellt werden kann. Zunächst wird nachfolgend eine erste Schaltstellung mit einer geringsten Federkonstante unter Bezug auf die Figuren 2 bis 4 beschrieben.

Die Federeinrichtung **40** hat eine erste Feder **45** und eine zweite Feder **46.** Die beiden Federn **45, 46** sind beispielsweise Spiralfedern, welche unter axialer Vorspannung eingesetzt sind. Für eine kompakte Bauweise kann die erste Feder **45** konzentrisch in die zweite Feder **46** eingesetzt sein. Die erste Feder **45** hat ein erstes Ende **47,** z.B. eine erste Windung und ein zweites Ende **48,** z.B. eine letzte Windung, gleichermaßen hat die zweite Feder **46** erstes Ende **49** und ein zweites Ende 50. Die jeweils ersten Enden **47, 49** der beiden Federn **45, 46** sind bezogen auf die zugehörigen zweiten Enden **48, 50** von dem Massekörper **31** abgewandt und weisen in die erste Richtung **42.** Die zweiten Enden **48, 50** weisen in die entgegengesetzte Richtung, in dem Beispiel auf den Massekörper **31** zu, d.h. in die zweite Richtung **43.**

Der Massekörper **31** ist mit dem zweiten Ende **48** der ersten Feder **45** gekoppelt. Eine von dem Massekörper **31** auf die erste Feder **45** ausgeübte axiale, d.h. längs der Tilgungsachse **32** wirkende, Kraft wird über deren zweites Ende **48** in die erste Feder **45** eingeleitet. Eine Anbindung des zweiten Endes **48** der ersten Feder **45** an den Massekörper **31** kann lösbar, z.B. durch reinen Kraftschluss der unter Vorspannung eingesetzten ersten Feder **45,** oder unlösbar, z.B. durch Formschluss, Materialschluss wie Schweißen, Kleben erfolgen. Das zweite Ende **48** der ersten Feder **45** kann den Massekörper **31** unmittelbar berühren.

Die zweite Feder **46** ist mit ihrem ersten Ende **49** mit dem Gehäuse **33** gekoppelt. Eine von dem Gehäuse **33** ausgeübte axiale Gegenkraft wird über das erste Ende **49** in die zweite Feder **46** eingeleitet. Eine Anbindung des ersten Endes **49** der zweiten Feder **46** an das Gehäuse 33 kann lösbar, z.B. durch reinen Kraftschluss der unter Vorspannung eingesetzten zweiten Feder **46,** oder unlösbar, z.B. durch Formschluss, Materialschluss wie Schweißen, Kleben erfolgen. Das erste Ende **49** der zweiten Feder **46** kann das Gehäuse **33** unmittelbar berühren.

Das erste Ende **47** der ersten Feder **45** und das zweite Ende **50** der zweiten Feder **46** sind in der ersten Schaltstellung mittelbar über eine axial bewegliche Kupplungsscheibe **60** und einen axial beweglichen Bügel **61** gekoppelt.

Die erste Feder **45** berührt mit ihrem ersten Ende **47** die Kupplungsscheibe **60.** Das erste Ende **47** kann unlösbar mit der Kupplungsscheibe **60** verbunden sein, oder wie dargestellt lösbar, unter Vorspannung an die Kupplungsscheibe **60** angepresst sein. Die Feder **45** kann eine Kraft in die erste Richtung **42** in die Kupplungsscheibe **60** einleiten. Bei einer Bewegung des Massekörpers **31** in die erste Richtung **42,** also auf die Kupplungsscheibe 60 zu, wird die erste Feder **45** komprimiert und drückt in die erste Richtung **42** auf die Kupplungsscheibe **60.**

Die zweite Feder **46** berührt mit ihrem zweiten Ende **50** den Bügel **61.** Das zweite Ende **50** kann lösbar oder unlösbar mit dem Bügel **61** verbunden sein. Die zweite Feder **46** kann eine Kraft in die zweite Richtung **43** in den Bügel **61** einleiten. Bei einer Bewegung des Bügels **61** in die erste Richtung **42** relativ zu dem Gehäuse **33** wird die zweite Feder **46** komprimiert und drückt in die zweite Richtung **43** auf den Bügel **61.**

Die Kupplungsscheibe **60** liegt mit einer ersten Anschlagfläche **62** an einer gegenüberliegenden zweiten Anschlagfläche **63** des Bügels **61** lösbar an. Die erste Anschlagfläche **62** weist in die erste Richtung **42,** die zweite Anschlagfläche **63** in die zweite Richtung **43.** Die Kupplungsscheibe **60** hintergreift bei einer Bewegung in die erste Richtung **42** den Bügel **61** und bewegt sich zusammen mit dem Bügel **61** in die erste Richtung **42.** Bei einer Bewegung der Kupplungsscheibe **60** in die zweite Richtung **43** löst und entfernt sich die Kupplungsscheibe **60** von dem Bügel **61.** Eine Kraftübertragung unter Zug ist zwischen der ersten Feder **45** und der zweiten Feder **46** nicht vorgesehen. Gleichermaßen kann sich der Bügel **61** in die erste Richtung **42** bewegen ohne die Kupplungsscheibe **60** mitzunehmen. Der in die erste Richtung **42** weisende Stirnseiten der Kupplungsscheibe **60** liegen in der ersten Richtung **42** keine Stirnseiten des Bügels **61** gegen.

Bei einer Auslenkung des Massekörpers **31** aus der Ruhelage in die erste Richtung **42** ergibt sich folgender Kraftpfad zwischen dem Massekörper **31** und dem Gehäuse **33.** Von dem Massekörper **31** aus durchläuft der Kraftpfad in folgender Reihenfolge die erste Feder **45,** die Kupplungsscheibe **60,** den Bügel **61,** die zweite Feder **46** und gelangt dann in das Gehäuse **33.** Ein axialer Hub **64,** um welchen der Massekörper **31** gegenüber dem Gehäuse **33** ausgelenkt ist, teilt sich auf die erste Feder **45** und die zweite Feder **46** auf (vgl. Fig. 3 und 4). Die erste Feder **45** wird um einen ersten Teil des Hubs **64** und die zweite Feder **46** um einen verbleibenden zweiten Teil des Hubs **64** komprimiert. Die Kupplungsscheibe **60** und der Bügel **61** bewegen sich zusammen mit dem Massekörper **31,** allerdings um einen reduzierten Hub **65,** weil die erste Feder **45** teilweise komprimiert wird. Der reduzierte Hub **65** ist gleich dem zweiten Teil des Hubs **64.** Die Aufteilung des axialen Hubs **64** auf den ersten Teil und den zweiten Teil ist umgekehrt proportional zu dem Verhältnis der Federkonstante der ersten Feder **45** zu der Federkonstante der zweiten Feder **46.**

Weil sich der Bügel **61** nur um den reduzierten Hub **65** bewegt, ergibt sich zwischen dem Massekörper **31** und dem Bügel **61** eine relative Bewegung um den ersten Teil des Hubs **64.** Der Massekörper **31** ist daher in Ruhestellung von dem Bügel **61** um einen ausreichenden axialen Abstand **66** entfernt, um sich berührungsfrei von dem Bügel **61** für einen gewünschten Hub axial bewegen zu können. Eine in die erste Richtung **42** weisende Stirnseite **67** des Massekörpers **31** kann erste Bereiche **68** aufweisen, die längs der ersten Richtung **42** weiter vorragen, als zweite Bereiche **69.** Gleichermaßen kann eine in die zweite Richtung **43** weisende Stirnseite **70** des Bügels **61** erste Bereiche **71** aufweisen, welche in die zweite Richtung **43** weiter vorragen als zweite Bereiche **72.** Der axiale Abstand **66** zwischen diesen unebenen Stirnseiten **67, 70** ist der kürzeste Abstand, gemessen parallel zur Tilgungsachse **32.** Zu jedem Punkt der ersten Stirnseite **67** wird der gegenüberliegende Punkt durch Projektion längs der Tilgungsachse **32** auf die zweite Stirnseite **70** bestimmt. Aus den Paarungen von Punkten definiert die Paarung mit dem geringsten Abstand den axialen Abstand **66.** Der axiale Abstand **66** beträgt z.B. wenigstens 5 mm.

Nachfolgend ist ein Aspekt einer zweiten Schaltstellung des Tilgers **30** mit einer zweiten, größeren Federkonstante beschrieben. In den Figuren 3, 6 und 7 sind die Änderungen der umgeschalteten Federeinrichtung **40** dargestellt.

Die Kupplungsscheibe **60** ist in der zweiten Schaltstellung der Federeinrichtung **40** an einer Bewegung längs der Tilgungsachse **32,** zumindest in die erste Richtung **42,** gehemmt. Der Bügel **61** ist vorzugsweise in der zweiten Schaltstellung weiterhin axial beweglich und nicht gehemmt. Der Kraftpfad von der Kupplungsscheibe **60** auf den Bügel **61** ist gegenüber der ersten Schaltstellung unterbrochen. Der Bügel **61** ist nicht mehr durch die erste Feder **45** kraftbeaufschlagt. Die erste Feder **45** leitet ihre Kräfte nun über die Kupplungsscheibe **60** unmittelbar in das Gehäuse **33** ein. Bei einer Auslenkung des Massekörpers **31** in die erste Richtung **42** wird der Bügel **61** und in Folge das zweite Ende **50** der zweiten Feder **46** gegenüber dem Massekörper 31 nicht bewegt.

Die erste Feder **45** wird um den gesamten Hub **64** des Massekörpers **31** komprimiert. Der Auslenkung des Massekörpers **31** um den Hub **64** wirkt eine größere Kraft entgegen als in der ersten Schaltstellung. Die Federkonstante der Federeinrichtung **40** ist somit erhöht. Aufgrund der Entkopplung der ersten Feder **45** von dem Bügel **61** ist die zweite Feder **46** nicht mehr von dem Massekörper mittelbar über die erste Feder **45** mit einer Kraft beaufschlagt.

Ein Wechsel zwischen der ersten Schaltstellung und der zweiten Schaltstellung kann durch Drehen der Welle **34** um einen Winkel **80** und ein Mitdrehen der Kupplungsscheibe **60** bewirkt werden. Die Kupplungsscheibe **60** kann von der Welle **34** getragen sein. Ein Gleitlager **81** der Kupplungsscheibe **60** ermöglicht ein axiales Gleiten auf der Welle **34,** hemmt jedoch ein relatives Drehen von Welle **34** und Kupplungsscheibe **60** um die Tilgungsachse **32.** Ein Querschnitt der Welle **34** kann beispielsweise quadratisch oder anderweitig nicht-rotationssymmetrisch sein, die Kupplungsscheibe hat eine komplementäre Hohlbohrung, welche auf die Welle **34** aufgeschoben ist.

Die Kupplungsscheibe **60** kann in der zweiten Schaltstellung mit dem Gehäuse **33** verriegelt und in der ersten Schaltstellung entriegelt sein. Die Kupplungsscheibe **60** hat beispielsweise eine zu der Welle **34** nicht-rotationssymmetrische Kontur mit einer exzentrischen dritten Anschlagfläche **82,** welche in die erste Richtung **42** weist. Das Gehäuse **33** hat eine ebenfalls nicht-rotationssymmetrische Kontur mit einer in die zweite Richtung **43** weisenden vierte Anschlagfläche **83.** In einer Drehstellung der Kupplungsscheibe **60** für die zweite Schaltstellung liegt der dritten Anschlagfläche **82** in der ersten Richtung **42** die vierte Anschlagfläche **83** gegenüber, d.h. ein Überlapp bei einer Projektion längs der Tilgungsachse **32** aufweisen. Vorzugsweise berühren sich die dritten Anschlagfläche **82** und die vierten Anschlagfläche **83** bereits wenn der Massekörper **31** in Ruhestellung ist. In einer anderen Drehstellung für die erste Schaltstellung sind die dritte Anschlagfläche **82** und die vierte Anschlagfläche **83** soweit winkelversetzt, dass sie längs der Tilgungsachse **32** nicht überlappen. Die dritte Anschlagfläche **82** und die vierte Anschlagfläche **83** können senkrecht zu der Tilgungsachse **32** oder gegenüber der Tilgungsachse **32** geneigt sein.

Eine beispielhafte Kontur der Kupplungsscheibe **60** hat radial abstehende Klauen **84,** deren in die erste Richtung **42** weisende Flächen die dritte Anschlagfläche **82** definieren. Eine Hülse **85** in dem Gehäuse **33** hat nach innen ragende Klauen **86,** deren in die zweite Richtung **43** weisenden Flächen die vierte Anschlagfläche **83** definieren. Ein Querschnitt des hohlen Inneren der Hülse **85** ist vorzugsweise komplementär zu einem Querschnitt der Kupplungsscheibe **60** ausgebildet. In der einen Drehstellung blockieren die Klauen **84, 86** eine relative Bewegung von Kupplungsscheibe **60** und Hülse **85,** in der anderen Drehstellung kann die Kupplungsscheibe **60** in der Hülse **85** gleiten. Die Klauen **84** der Kupplungsscheibe **60** können auch die erste Anschlagfläche **62** bilden. In der dargestellten Ausführungsform bildet die Klaue **84** je nach Stellung eine Anschlagfläche **62** für den Bügel **61** und eine Anschlagfläche **82** gegen das Gehäuse **33.**

Eine Weiterbildung sieht vor, die Kupplungsscheibe **60** an dem Gehäuse **33** in der einen Drehstellung Schaltstellung formschlüssig anzulegen, wodurch auch eine Bewegung in die zweiten Richtung **43,** also in Richtung zu dem Massekörper **31,** unterbunden ist. Hierzu können beispielsweise zwei axial versetzte Klauen der Hülse **85** eine zwischen diese hineingedrehte Klaue der Kupplungsscheibe **60** in der zweiten Schaltstellung in beiden Richtungen **42, 43** umgreifen.

In einer alternativen Ausführungsform ist die Kupplungsscheibe rotationsfest und längs der Tilgungsachse **32** von dem Gehäuse **33** geführt. Die Welle **34** ist gegenüber der Kupplungsscheibe drehbar. Ein Verriegelungselement, z.B. ein Zapfen an der Welle **34,** greift in der einen Drehstellung in die Kupplungsscheibe ein und unterbindet die eine Bewegung längs der Tilgungsachse **32.**

Eine weitere alternative Ausführungsform sieht vor, die Kupplungsscheibe **60** mittels eines radial eingeschobenen Zapfens in der einen Drehstellung zu arretieren. Ein Drehen der Welle **34** zum Einstellen der ersten Schaltstellung und zweiten Schaltstellung kann entfallen. Eine weitere Ausführungsform sieht vor, dass in der zweiten Schaltstellung eine Klinke den Massekörper **31** mit dem Bügel **61** verbindet und die Klinke in der ersten Schaltstellung aus Eingriff mit dem Bügel **61** genommen ist. Ein Drehen des Massekörpers **31** kann entfallen.

Nachfolgend wird ein weiterer Aspekt der zweiten Schaltstellung des Tilgers **30** mit der größeren Federkonstante beschrieben. In den Figuren 3, 6 und 7 sind die Änderungen der umgeschalteten Federeinrichtung **40** dargestellt.

Der Massekörper **31** ist in Kontakt mit dem Bügel **61,** vorzugsweise berührt der Massekörper 31 den Bügel **61** bereits in seiner Ruhestellung. Der Bügel **61** ist an einer relativen Bewegung in die zweiten Richtung **43** gegenüber dem Massekörper **31** gehemmt. Die Kupplungsscheibe **60** kann gegenüber dem Massekörper **31** in die zweite Richtung **43** beweglich sein. Der Kraftpfad ist gegenüber der ersten Schaltstellung verändert. Der Massekörper **31** leitet eine Kraft unmittelbar in die zweite Feder **46** ein, d.h. nicht mittelbar über die erste Feder **45.** Die zweite Feder **46** leitet ihre Gegenkräfte unmittelbar in den Massekörper **31** ein und ist von der ersten Feder **45** entkoppelt.

Bei einer Auslenkung des Massekörpers **31** um den Hub **64** wird die zweite Feder **46** um diesen gesamten Hub **64** komprimiert. Dem Massekörper **31** wirkt nun einen größere Kraft entgegen als in der ersten Schaltstellung.

Der Bügel **61** kann sich bei einer axialen Bewegung längs der Tilgungsachse **32** von wenigstens einem der beiden an ihm angekoppelten Enden **48, 49** der Federn **45, 46** entkoppeln. Vorzugsweise kann sich der Bügel **61** von der Kupplungsscheibe 60 lösen und damit von dem ersten Ende **47** der ersten Feder **45** entkoppeln. Das andere Ende **49** kann unlösbar mit dem Bügel **61** gekoppelt sein, z.B. form- und/oder materialschlüssig.

Ein Wechsel von der ersten Stellung in die zweite Stellung kann durch Drehen der Welle **34** erfolgen. Der Massekörper **31** lässt sich durch Drehen der Welle **34** relativ zu dem Bügel **61** um einen Winkel **80** drehen. Die Stirnseite **70** des Bügels **61** hat erste Bereiche **71** welche gegenüber zweiten Bereichen **72** in Richtung zu dem Massekörper **31,** d.h. die zweite Richtung **43** vorgerückt sind. Die Stirnseite **67** des Massekörpers **31** hat erste Bereiche 68 und zweite Bereiche **69,** die den ersten Bereichen **68** und den zweiten Bereichen 69 längs der Tilgungsachse **32** gegenüberliegen. Die ersten Bereiche **68** sind gegenüber den zweiten Bereichen **69** in Richtung zu dem Bügel **61** vorgerückt. Die zurückgesetzten, zweiten Bereiche **69, 72** können beispielsweise als Aussparungen **87** in dem zylindrischen Grundkörper des Massekörpers **31** bzw. dem Bügel **61** ausgebildet sein. In der ersten Schaltstellung sind die ersten Bereiche **71** des Bügels **61** und die ersten Bereiche **68** des Massekörpers **31** winkelversetzt und liegen den jeweils zurückgesetzten, zweiten Bereiche **69, 72** gegenüber. Die vorgerückten, ersten Bereiche **68, 71** können relativ zueinander axial bewegt werden und in die zurückgesetzten Bereiche **69, 72** eintauchen. In der zweiten Schaltstellung liegen die vorgerückten, ersten Bereiche **71** des Bügels **61** an den vorgerückten ersten Bereichen **71** des Massekörpers **31** an, vorzugsweise bereits wenn der Massekörper **31** in Ruhestellung ist. Eine relative Bewegung von Massekörper **31** und Bügel **61** ist in der zweiten Schaltstellung unterbunden.

Die ersten Bereiche und zweiten Bereiche können auch durch eine zur Tilgungsachse **32** geneigte Stirnseite gebildet sein.

Der Bügel **61** kann beispielsweise eine Hülse **88** aufweisen, welche koaxial zwischen der ersten Feder **45** und der zweiten Feder **46** angeordnet ist. An einem ersten Ende der Hülse **88** bildet ein radial nach innen ragender Ring **89** einen Anschlag für die Kupplungsscheibe **60.** An dem zweiten Ende sind radial nach außen ragende Klauen **90** vorgesehen, welche die vorspringenden Bereiche **71** bilden.

Nachfolgend wird ein weiterer Aspekt der zweiten Schaltstellung des Tilgers **30** mit der größeren Federkonstante beschrieben. In den Figuren 3, 6 und 7 sind die Änderungen der umgeschalteten Federeinrichtung **40** gegenüber der ersten Schaltstellung dargestellt.

In der dargestellten zweiten Schaltstellung sind die Funktionen der beiden vorhergehenden Aspekte der zweiten Schaltstellung kombiniert. Die Kupplungsscheibe **60** ist in axialer Richtung an einer Bewegung gehemmt und der Massekörper **31** wirkt unmittelbar auf die zweite Feder **46,** in dem der Massekörper **31** sich an dem Bügel **61** abstützt. Die erste Feder **45** und die zweite Feder **46** werden beide um den axialen Hub **64** des Massekörpers **31** verschoben. Der Massekörper **31** wird dadurch gegen die Summe der Kräfte beiden parallel geschalteten Federn **45, 46** ausgelenkt.

Bei der dargestellte Ausführungsform können durch die Welle **34** der Massekörper **31** und die Kupplungsscheibe **60** gedreht werden, der Bügel **61** ist gegenüber dem Gehäuse **33** vorzugsweise rotationsfest. Die erste Feder **45,** welche zwischen dem Massekörper **31** und der Kupplungsscheibe **60** eingeklemmt, d.h. unter Vorspannung eingesetzt, ist, wird mit diesen mitgedreht Die zweite Feder **46** ist rotationsfest, so wie das Gehäuse **33** und der Bügel **61.** Die Federn **45, 46** werden beim Einstellen einer gewünschten Schaltstellung nicht um die Tilgungsachse 32 verdrillt.

Die Federn **45, 46** können mit gleicher oder unterschiedlicher Steifigkeit ausgebildet sein. Statt der beispielhaft als Spiralfedern dargestellten Federn können auch Federn aus einem elastischen Kunststoff, z.B. einem Elastomer, sein.

Eine weitere Ausführungsform ist ohne die Kupplungsscheibe und mit dem Bügel **61** ausgebildet. Die erste Feder **44** liegt lösbar mit dem ersten Ende **47** unmittelbar an der zweiten Anschlagfläche **63** des Bügels **61** an. Das erste Ende **47** der Feder **44** und der Bügel **61** bilden je ein Element einer schaltbaren kraftübertragenden Kupplung. An der Welle 34 ist ein exzentrischer Anschlag vorgesehen, welcher in einer Drehstellung eine Bewegung des Bügels **61** in die erste Richtung **42** hemmt (z.B. für die zweite Schaltstellung) und in einer anderen Drehstellung die Bewegung des Bügels **61** in die erste Richtung **42** freigibt (z.B. für die erste Schaltstellung). Durch das Drehen der Welle **34** kann auch gleichzeitig der Massekörper **31** wie oben beschrieben für weitere Schaltstellungen oder kombinierte Schaltstellungen gedreht werden.

Der Tilger **30** kann in einer Stichsäge oder einer Säbelsäge angeordnet sein. Die Ausrichtung der Tilgungsachse **32** ist vorzugsweise parallel zu der Hubrichtung eines Sägeblatts.

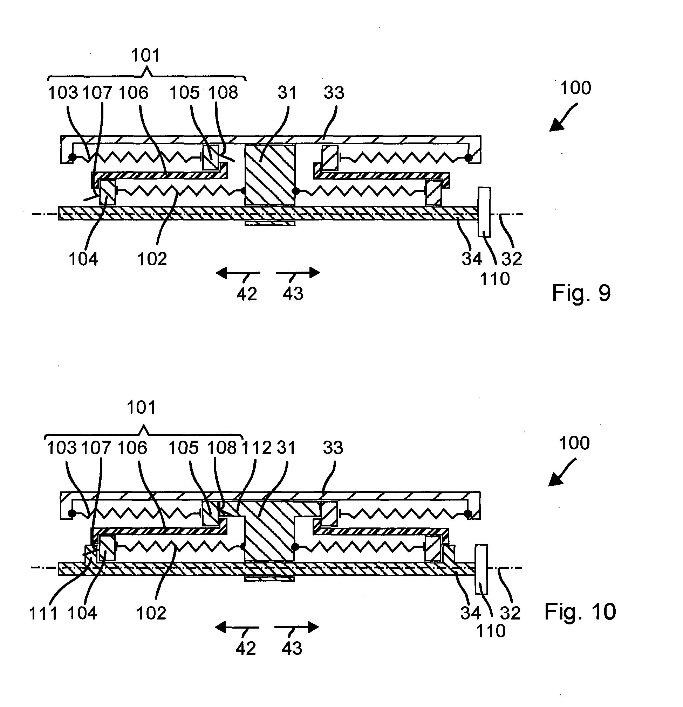

Fig. 9 und 10 illustrieren schematisch eine weitere Ausführungsform eines Tilgers **100** und dessen Federeinrichtung **101.** Die Federeinrichtung **101** hat eine erste Feder **102** und eine zweite Feder **103,** welche beide unter Druck belastet sind. Die erste Feder **102** wird in die erste Richtung **42** von dem Massekörper **31** kraftbeaufschlagt. Die zweite Feder **103** stützt sich in die erste Richtung **42** an dem Gehäuse **33** ab. Zwischen der ersten Feder **102** und der zweiten Feder **103** sind drei Kupplungselemente **104, 105, 106** angeordnet, welche axial beweglich gelagert sind. Das erste Kupplungselement **104** liegt an der ersten Feder **102** und hat eine in die erste Richtung **42** weisende erste Anschlagfläche **107.** Das zweite Kupplungselement **105** liegt an der zweiten Feder **103** an und hat eine in die der ersten Richtung **42** entgegengesetzte, zweite Richtung **43** weisende, zweite Anschlagfläche **108.** Die beiden Anschlagflächen **107, 108** können in einer Projektion senkrecht zur Tilgungsachse **32** ohne Überlapp sein. Das dritte Kupplungselement **106** liegt an der ersten Anschlagfläche **107** und an der zweiten Anschlagfläche **108** an. Das erste Kupplungselement **104** nimmt bei einer Bewegung in die erste Richtung **42** über das dritte Kupplungselement **106** das zweite Kupplungselement **105** mit. Das Kupplungselement **106** ist vorzugsweise ein starrer Körper. Die beiden Federn **102, 103** sind in Serie geschaltet (Fig. 9).

Ein Schaltmechanismus **110** kann die Federn **102, 103** parallel schalten. Der Schaltmechanismus **110** hat einen senkrecht zur Tilgungsachse **32** beweglichen Anschlag **111,** welcher in einer Stellung für eine Parallelschaltung das erste Kupplungselement **104** an einer Bewegung in die erste Richtung **42** hindert. Ein weiterer beweglicher Anschlag **112** hindert in einer Stellung das zweite Kupplungselement **104** an einer relativen Bewegung in die zweite Richtung **43.** Der Schaltmechanismus **110** kann beispielsweise durch Drehen der Welle **34** betätigt werden.

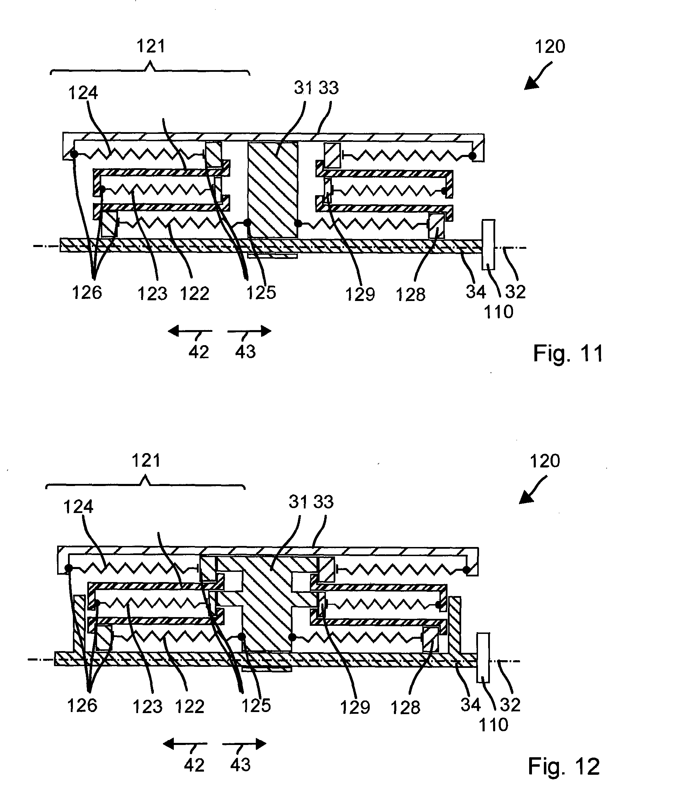

Fig. 11 und Fig. 12 zeigen eine weitere Ausführungsform eines Tilgers **120** mit einer Federeinrichtung **121,** die eine größere Anzahl von unter Druck belasteter Federn **122** hat. Statt zwei Federn sind mehrere Federn **122, 123, 124** kaskadiert. Die Federn **122, 123, 124** haben jeweils ein in die erste Richtung **42** weisendes erstes Ende **125** und ein in die zweite Richtung **43** weisendes zweites Ende **126.** Die Federn **122, 123, 124** sind in einer aufsteigenden Reihenfolge angeordnet, wobei die erste Feder **122** in jeder Schaltstellung unmittelbar mit dem Massekörper **31** und die letzte Feder **124** in jeder Schaltstellung unmittelbar mit dem Gehäuse **33** gekoppelt ist. Zwischen benachbarte Federn **122, 123; 123, 124** etc. sind jeweils ein erstes Kupplungselement **128** und ein zweites Kupplungselement 129 geschaltet. Die Bauform der Kupplungselemente **128, 129** kann beispielsweise von der Kupplungsscheibe 60 und dem Bügel **61** abgeleitet werden. Das erste Kupplungselement 128 liegt in der ersten Richtung **42** an dem zweiten Kupplungselement **129** an. Eine Bewegung des ersten Kupplungselement **128** in die erste Richtung **42** erfolgt nur gemeinsam mit dem zweiten Kupplungselement **129,** gleichermaßen eine Bewegung des zweiten Kupplungselement **129** nur gemeinsam mit dem ersten Kupplungselement **128.**

In einer Schaltstellung sind die ersten Kupplungselemente **128** gegenüber dem Gehäuse **33** in die erste Richtung **42** frei beweglich, die zweiten Kupplungselemente **129** gegenüber dem Massekörper **31** in die zweite Richtung **43** freibeweglich. Der Massekörper **31** stützt sich über die in Serie geschalteten Federn **122, 123, 124bzan** dem Gehäuse **33** ab (Fig. 11 ).

In einer weiteren Schaltstellung sind die ersten Kupplungselemente **128** an einer relativen Bewegung in die erste Richtung **42** gegenüber dem Gehäuse **33** und die zweiten Kupplungselemente **129** an einer Bewegung in die zweite Richtung **43** gegenüber dem Massekörper **31** gehemmt. Der Massekörper **31** stützt sich über die parallel geschalteten Federn **122, 123, 124, 125, 126** an dem Gehäuse **33** ab (Fig. 12).

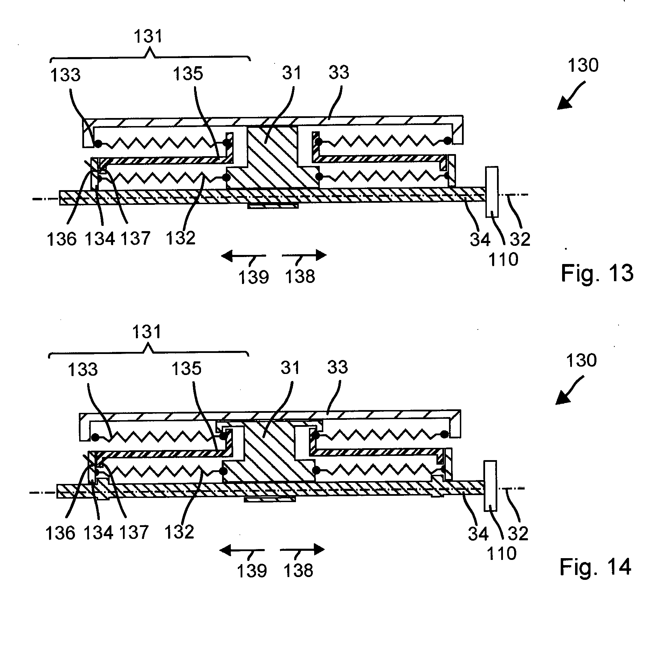

Fig. 13 und Fig. 14 illustrieren eine weitere Ausführungsform eines Tilgers **130** mit einer Federeinrichtung **131** mit unter Zug belasteten Federn **132, 133.** Die Abwandlung gegenüber den vorher beschriebenen Ausführungsformen liegt in der relativen Anordnung der ersten Kupplungselemente **134** und der zweiten Kupplungselemente **135.** Die Wirkrichtung der ersten Feder **132** auf das erste Kupplungselement **134** verläuft in Richtung zu dem Massekörper **31.** Das erste Kupplungselement **134** hat eine erste Anschlagfläche **136,** die an einer zweiten Anschlagfläche **137** des zweiten Kupplungselements **135** anliegt. Die erste Anschlagfläche **136** weist in eine erste Richtung **138** auf den Massekörper **31** zu, weil diese der Wirkrichtung der ersten Feder **132** auf das erste Kupplungselement **135** entspricht. Die zweite Anschlagfläche **137** ist entsprechend der Wirkrichtung der zweiten Feder **133** in eine zweite Richtung **139** auf das Gehäuse **33** zu orientiert. Die Federn **132, 133** wirken in Serie.

Eine andere Schaltstellung mit den Federn **132, 133** parallel geschaltet ist in Fig. 14 gezeigt. Eine Bewegung des ersten Kupplungselements **134** ist in die erste Richtung **138,** eine Bewegung des zweiten Kupplungselements **135** in die zweite Richtung **139** gehemmt. Weitere Schaltstellungen gemäß der zweiten und der dritten Schaltstellung der vorhergehenden Ausführungsformen können durch selektives Hemmen der Kupplungselemente **134, 135** realisiert werden.

## Patentansprüche

1. Tilger für eine Handwerkzeugmaschine (1) mit einem Linearantrieb (5), wobei der Tilger (30) aufweist:
ein Gehäuse (33),
einen gegenüber dem Gehäuse (33) längs einer Tilgungsachse (32) beweglichen Massekörper (31), und
ein längs der Tilgungsachse (32) bewegliches, erstes Kupplungselement (60; 104; 128; 134), das mittels einer ersten Feder (45; 102; 122; 132), die mit dem Massekörper (31) gekoppelt ist, in eine erste
Richtung (42; 138) kraftbeaufschlagt ist, **dadurch gekennzeichnet, dass** ein längs der Tilgungsachse (32) bewegliches, zweites Kupplungselement (61; 106; 135), das mittels einer zweiten Feder (46; 103; 123; 124; 139), die mit dem Gehäuse (33) gekoppelt ist, in eine der
ersten Richtung (42; 138) entgegengesetzte zweite Richtung (43; 139) kräftbeaufschlagt ist,
wobei das erste Kupplungselement (60; 104; 128; 134) bei einer Bewegung in die erste Richtung (42; 138) mit dem zweiten Kupgungselement (61; 106; 135) kraftschlüssig gekoppelt und das erste Kupplungselement (60; 104; 128; 134) bei einer Bewegung in die zweite Richtung (43; 139) von dem zweiten Kupplungselement (61; 106; 135) entkoppelt ist,
eine Schalteinrichtung (44), die in Abhängigkeit von Schaltstellungen eine Bewegung des ersten Kupplungselements (60; 104; 128; 134) in die erste Richtung (42; 138) relativ zu dem Gehäuse (33) hindert oder freigibt und/oder in Abhängigkeit der Schaltstellungen eine Bewegung des zweiten Kupplungselements (61; 106; 135) in die zweite Richtung (43; 139) relativ zu dem Massekörper (31) hindert oder freigibt.

2. Tilger nach Anspruch 1, **dadurch gekennzeichnet, dass** in einer der Schaltstellungen der Massekörper (31) das zweite Kupplungselement (61) an der in die zweite Richtung (43) weisenden, dritten Fläche (82) berührt und in einer anderen Schaltstellung der Massekörper (31) von der dritten Fläche (82) beabstandet ist.

3. Tilger nach Anspruch 1 oder 2, **dadurch gekennzeichnet, dass** in einer der Schaltstellungen das Gehäuse (33) das erste Kupplungselement (60) an der in die erste Richtung (42) weisenden, vierten Fläche (83) berührt und in einer anderen Schaltstellung das Gehäuse (33) von der vierten Fläche (83) beabstandet ist.

4. Tilger nach einem der vorhergehenden Ansprüche, **dadurch gekennzeichnet, dass** der Massekörper (31) auf einer Welle (34) längs einer Achse (32) beweglich angeordnet ist, und mittels der Schalteinrichtung (44) der Massekörper (31) und die Welle (34) gegenüber dem Gehäuse (33) um die Achse (32) verschwenkbar sind.

5. Handwerkzeugmaschine mit einem Tilger (30) nach einem der vorhergehenden Ansprüche, **dadurch gekennzeichnet, dass** das erste Kupplungselement (60) eine in die ersten Richtung (42) weisende, erste Anschlagfläche (62) und das zweite Kupplungselement (61) eine in die zweite Richtung (43) weisende; zweiten Anschlagfläche (63) hat, wobei
a) die erste Anschlagfläche (62) an der zweiten Anssglagfläche (63) anliegt und von der zweiten Anschlagfläche (63) in die zweite Richtung (43) lösbar ist, oder wobei
b) ein längs der Tilgungsachse (32) bewegliches drittes Kupplungselement an der ersten Anschlagfläche (62) und der zweiten Anschlagfläche (63) anliegt und von wenigstens von der ersten Anschlagfläche (62) in die zweite Richtung (43) oder von der zweiten Anschlagfläche (63) in die erste Richtung (42) lösbar ist.

6. Handwerkzeugmaschine nach Anspruch 5, **gekennzeichnet durch** ein pneumatisches Schlagwerk, dessen Schlagperiode über ein Schaltelement einstellbar ist, und das Schaltelement mit der Schalteinrichtung (44) gekoppelt ist.

## Claims

1. Absorber for a hand power tool (1) with a linear drive (5), in which the absorber (30) has:
a housing (33),
a mass (31) that may move along an absorption axis (32) in relation to the housing (33) and
a first coupling element (60; 104; 128; 134) that may move along the absorption axis (32) has a force applied to it in a first direction (42; 138) by means of a first spring (45; 102; 122; 132) that is connected to the mass (31), **characterised in that** a second coupling element (61; 106; 135) that may move along the absorption axis (32) has a force applied to it in a second direction (43; 139) that is opposite the first direction (42; 138) by means of a second spring (46; 103; 125; 124; 133), in which the first coupling element (60; 104; 128; 134) is connected to the second coupling element (61; 106; 135) by force locking when there is a movement in the first direction (42; 138) and the first coupling element (60; 104; 128; 134) is decoupled from the second coupling element (61; 106; 135) when there is a movement in the second direction (43; 139),
a switching device (44) that, depending on the switch settings, prevents or allows a movement of the first coupling element (60; 104; 128; 134) in the first direction (42; 138) in relation to the housing and/or, depending on the switch settings, prevents or allows a movement of the second coupling element (61; 106; 135) in the second direction (43; 139) in relation to the mass (31).

2. Absorber according to claim 1, **characterised in that** in one of the switch settings the mass (31) is in contact with the second coupling element (61) on the third surface (82) pointing in the second direction (43) and in another switch setting the mass (31) is at a distance from the third surface (82).

3. Absorber according to claim 1 or 2, **characterised in that** in one of the switch settings the housing (33) is in contact with the first coupling element (60) on the fourth surface (83) pointing in the first direction (42) and in another switch setting the housing (33) is at a distance from the fourth surface (83).

4. Absorber according to one of the previous claims, **characterised in that** the mass (31) is arranged on a shaft (34) so that it may move along an axis (32) and by means of the switching device (44) the mass (31) and the shaft (34) may be swivelled around the axis (32) in relation to the housing (33).

5. Hand power tool with an absorber (30) according to one of the previous claims, **characterised in that** the first coupling element (60) has a first striking surface (62) pointing in the first direction (42) and the second coupling element (61) has a second striking surface (63) pointing in the second direction (43), in which
a) the first striking surface (62) abuts the second striking surface (63) and may be loosened from the second striking surface (63) in the second direction (43) or in which
b) a third coupling element that may move along the absorption axis (32) abuts the first striking surface (62) and the second striking surface (63) and may be loosened from at least the first striking surface (62) in the second direction (43) or from the second striking surface (63) in the first direction (42).

6. Hand power tool according to claim 5, **characterised by** a pneumatic striking mechanism, the striking period of which may be adjusted through a switching element, and the switching element is connected to a switching device (44).

## Revendications

1. Amortisseur pour une machine-outil manuelle (1) comprenant un entraînement linéaire (5), l'amortisseur (30) présentait
un carter (33),
un poids (31), mobile le long d'un axe d'amortissement (32), face au carter (33), et
un premier élément de couplage (60 ; 104 ; 128 ; 134), mobile le long de l'axe d'amortissement (32), qui est soumis à une force dans une première direction (42 ; 138) au moyen d'un premier ressort (45 ; 102 ; 122 ; 132), lequel est couplé avec le poids (31), **caractérisé en ce**
**qu'**un deuxième élément de couplage (61 ; 106 ; 135), mobile le long de l'axe d'amortissement (32), qui est soumis à une force dans une deuxième direction (43 ; 139), opposée à la première direction (42 ; 138), au moyen d'un deuxième ressort (46 ; 103 ; 123 ; 124 ; 133), lequel est couplé avec le carter (33), le premier élément de couplage (60 ; 104 ; 128 ; 134) étant couplé de manière solidaire avec un deuxième élément de couplage (61 ; 106 ; 135) lors d'un mouvement dans la première direction (42 ; 138) et le premier élément de couplage (60 ; 104 ; 128 ; 134) étant découplé du deuxième élément de couplage (61 ; 106 ; 135) dans un mouvement dans la deuxième direction (43 ; 139),
un système de commutation (44), qui, en fonction des positions de commutation, empêche ou libère un mouvement du premier élément de couplage (60 ; 104 ; 128 ; 134) dans la première direction (42 ; 138) par rapport au carter (33), et/ou, en fonction des positions de commutation, empêche ou libère un mouvement du deuxième élément de couplage (61 ; 106 ; 135) dans la deuxième direction (43 ; 139) par rapport au poids (31).

2. Amortisseur selon la revendication 1, **caractérisé en ce que**, dans l'une des positions de commutation, le poids (31) est en contact avec le deuxième élément de couplage (61) au niveau d'une troisième surface (82) pointant dans la deuxième direction (43) et que le poids (31) est placé à distance de la troisième surface (82) dans une autre position de commutation.

3. Amortisseur selon les revendications 1 ou 2, **caractérisé en ce que**, dans l'une des positions de commutation, le carter (33) est en contact avec le premier élément de couplage (60) au niveau d'une quatrième surface (83) pointant dans la première direction (42) et que le carter (33) est éloigné de la quatrième surface (83) dans une autre position de commutation .

4. Amortisseur selon l'une des revendications précédentes, **caractérisé en ce que** le poids (31) est disposé mobile le long d'un axe (32) sur un arbre (34), et que le poids (31) et l'arbre (34) peuvent être pivotés par rapport au carter (33) autour de l'axe (32) au moyen du système de commutation (44).

5. Machine-outil manuelle comprenant un amortisseur (30) selon l'une des revendications précédentes, **caractérisé en ce que** le premier élément de couplage (60) possède une première surface de butée (62) pointant dans la première direction (42), et que le deuxième élément de couplage (61) possède une deuxième surface de butée (63) pointant dans la deuxième direction (43),
a) la première surface de butée (62) étant adjacente à la deuxième surface de butée (63) et pouvant être détachée de la deuxième surface de butée (63) vers la deuxième direction (43), ou
b) un troisième élément de couplage, mobile le long de l'axe d'amortissement (32), étant adjacent à la première surface de butée (62) et à la deuxième surface de butée (63), et peut être détaché au moins de la première surface de butée (62) vers la deuxième direction (43), ou de la deuxième surface de butée (63) dans la première direction (42).

6. Machine-outil manuelle selon la revendication 5, **caractérisée par** un mécanisme de percussion pneumatique, dont la période de percussion peut être réglée par l'intermédiaire d'un élément de commutation, et l'élément de commutation est couplé avec le système de commutation (44).
